# EUROPÄISCHE PATENTSCHRIFT

(11) **EP 1 646 814 B1**
(45) Veröffentlichungstag und Bekanntmachung des Hinweises auf die Patenterteilung: **21.03.2007**
(21) Anmeldenummer: 04740818.2
(22) Anmeldetag: 08.07.2004
(51) Int. Cl.: F16J 15/34, F01D 11/00, C04B 35/80

(54) **GLEITRING UND GLEITRINGDICHTUNGSANORDNUNG FÜR STRAHLTRIEBWERKE**
SLIDE RING AND SLIDE-RING SEAL ASSEMBLY FOR JET ENGINES
ANNEAU DE GLISSEMENT ET SYSTEME D'ETANCHEITE A ANNEAU DE GLISSEMENT POUR MOTEURS A REACTION

(30) Priorität: 23.07.2003 DE 20311346 U
(43) Veröffentlichungstag der Anmeldung: 19.04.2006
(73) Patentinhaber: Burgmann Industries GmbH & Co. KG, 82515 Wolfratshausen (DE)
(72) Erfinder: HASELBACHER, Peter, 82538 Geretsried (DE); KELLER, Thomas, 82538 Geretsried (DE)
(74) Vertreter: Schmidt, Horst
(86) Internationale Anmeldenummer: PCT/EP2004/007524
(87) Internationale Veröffentlichungsnummer: WO 2005/015063

(56) Entgegenhaltungen:
- EP-A- 0 976 698
- DE-A- 2 754 461
- DE-U- 20 212 848
- US-A- 3 000 846
- US-A- 4 341 840
- US-A- 5 130 055
- DATABASE WPI Section Ch, Week 199945 Derwent Publications Ltd., London, GB; Class L02, AN 1999-532121 XP002299266 -& JP 11 230365 A (EAGLE KOGYO KK) 27. August 1999 (1999-08-27)

## Beschreibung

Die Erfindung betrifft einen zur gemeinsamen Drehung mit einer Triebwerkswelle ausgelegten Gleitring einer Gleitringdichtungsanordnung für Strahltriebwerke, insbesondere solcher für den Flugzeugbau.

Sofern bei Flugzeug-Strahltriebwerken zur Abdichtung von Turbinen- und sonstigen Wellen Gleitringdichtungen zum Einsatz kommen, ist eine wesentliche Anforderung an derartige Dichtungen, dass ausreichend duktile Materialien vorgesehen werden, um Sprödbrüche unter den einwirkenden hohen Zentrifugalkräften und eine damit verbundene Gefahr der Beschädigung von Triebwerksteilen durch umherfliegende Splitterteile zu vermeiden. Entsprechend dieser Anforderung ist man zwar in der Wahl eines für den stationären Gleitring geeigneten Materials vergleichsweise frei, doch bestand bislang die Notwendigkeit, für den rotierenden Gleitring ausschliesslich ein Stahlmaterial wegen dessen ausreichender Duktilität und damit fehlender Sprödbruchneigung zu verwenden. Die rotierenden Gleitringe bekannter Gleitringdichtungen im Flugzeugtriebwerksbau sind daher entsprechend schwer, zumal die im Flugzeugtriebwerksbau zum Einsatz kommenden Gleitringe vergleichsweise grosse Abmessungen haben müssen. Andererseits ist Leichtbau ein wesentliches Gestaltungskriterium im Flugzeugbau schlechthin und im Triebwerksbau speziell, wobei als Anhaltswert gilt, dass eine Gewichtseinsparung bei einem Strahltriebwerk von einem Kilogramm z.B. 10⁶ EUR Entwicklungskosten erforderlich macht. Angesichts dessen spielen die reinen Materialkosten eine untergeordnete Rolle.

Es wurde schon vorgeschlagen (DE 27 54 461 A), zur Abdichtung eines rotierenden gegenüber einem stationären Teil einer Gasturbine eine Dichtungspackung aus einem Verbundmaterial aus SiC mit darin eingelagerten kurzen Kohlenstofffasern zu bilden. Bekannt ist es auch (US 4 341 840 A), für die Bildung von Gleitlagerbüchsen, Dichtungspackungen, Bremsen Kohlenstofffaser-verstärktes Glass heranziehen. Auch hat man schon vorgeschlagen (JP 11-230365 A), zur Vermeidung von Rissbildung auf einem Basiskörper aus duktilem Material eines Gleitringes eine Gleitschicht aus SiC aufzubringen. Schliesslich ist aus der US Patentschrift 3 000 846 eine Dichtungspackung aus einem keramischen Verbundmaterial mit einem Vertärkungsgewebe aus keramischen Fasern bekannt.

Der Erfindung liegt die Aufgabe zugrunde, ohne Einbusse an Sicherheit, insbesondere gegen Sprödbruch, und unter zumindest Aufrechterhaltung der bisherigen sonstigen Betriebsanforderungen eine wesentliche Gewichtsreduzierung bei Gleitringdichtungen zum Einsatz in Flugzeugstrahltriebwerken zu ermöglichen.

Diese Aufgabe wird erfindungsgemäss dadurch gelöst und damit ein dringender Bedarf im Flugzeug-Strahtriebswerksbau befriedigt, dass zum Einsatz auf diesem Gebiet der rotierende Gleitring einer Gleitringdichtungsanordnung aus einem ein faserverstärktes Keramikmaterial umfassenden Verbundmaterial mit gerichteten Vertärkungsfasern gebildet ist. Eine Deckschicht aus einem faserverstärkten SiC-Verbundmaterial ist auf wenigstens einer der gegenüberliegenden Stirnflächen des Gleitringes vorgesehen, wobei die Vertärkungsfasern der Deckschicht ungerichtet sind. Vorzugsweise handelt es sich bei den Verstärkungsfasern um Kohle- oder SiC-Fasern. Das faserverstärkte Keramikmaterial hat eine ausreichende Festigkeit und Duktilität, um unter den im Strahltriebwerksbau herrschenden Betriebsbedingungen, die insbesondere durch hohe Drehgeschwindigkeiten der abzudichtenden Wellen geprägt sind, eine gegenüber Stahlgleitringen gleich gute, wenn nicht sogar bessere Sicherheit gegen Sprödbruch zu gewährleisten. Hinzu kommt ein verbessertes Verschleissverhalten wegen der inherenten Verschleissfestigkeit des SiC-Matrixmaterials der Verbundgleitringe und eine Vereinfachung der Konstruktion einer damit ausgestatteten Gleitringdichtungsanordnung, da auf bei Stahlgleitringen vorzusehende Kühlmassnahmen verzichtet werden kann. Ein primärer Vorteil der erfindungsmässen Verbundgleitringe ist jedoch deren erheblich geringeres Gewicht gegenüber Gleitringen aus einem Stahlmaterial, wodurch erhebliche Entwicklungskosten eingespart werden können. Eine erfindungsgemässe gasgeschmierte Gleitringdichtungsanordnung für Strahltriebwerke umfasst wenigstens ein Paar zusammenwirkende Gleitringe, von denen einer zur drehfesten Montage an einem stationären Bauteil, wie dem Triebwerksgehäuse, und der andere zur gemeinsamen Drehung mit einer Triebwerkswelle ausgelegt ist, wobei erfindungsgemäss eine Werkstoffpaarung für die Gleitringe vorgesehen ist, die ein reibungsminimierend wirksames Material, wie ein Kohlenstoffmaterial, für den stationären Gleitring und ein erfindungsgemässes Verbundmaterial für den rotierenden Gleitring umfasst.

Die Erfindung wird nachfolgend anhand von Ausführungsformen und Abbildungen näher erläutert. Es zeigen:
- Fig. 1: eine fotografische Abbildung eines rotierenden Gleitringes gemäss der Erfindung bei Betrachtung seitens einer seiner Stirnflächen,
- Fig. 2: in einer geschnittenen Ansicht eine Gleitringdichtungsanordnung, ausgestattet mit einem rotierenden Gleitring nach der Erfindung, im Zustand des Einbaus in einem schematisch angedeuteten Strahltriebwerk (Teilansicht).

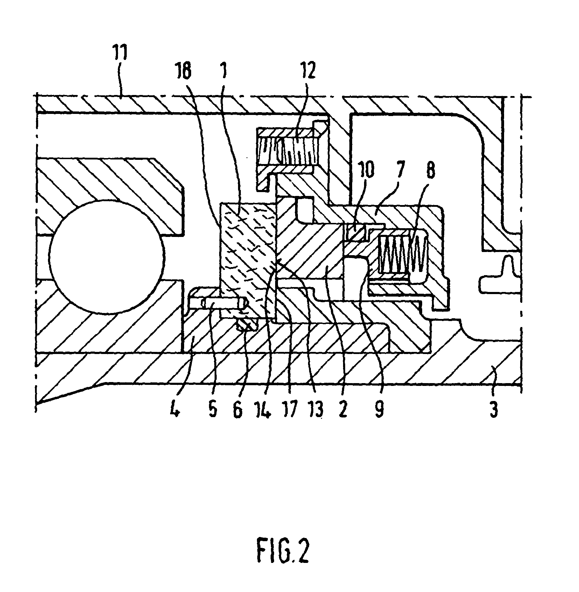

Zunächst wird nachfolgend auf Fig. 2 Bezug genommen. Die darin gezeigte Gleitringdichtungsanordnung umfasst ein Paar zusammenwirkende Gleitringe 1, 2, von denen der eine Gleitring 1 in der erfindungsgemässen Weise ausgebildet ist, worauf später mit weiteren Details eingegangen wird. Dieser Gleitring 1 ist zur gemeinsamen Drehung mit einer Triebwerkswelle 3 bzw. einer darauf aufgesetzten Buchse 4 vorgesehen. Zur Übertragung der Drehkraft von der Buchse 4 auf den Gleitring 1 ist eine Mitnehmeranordnung 5 vorgesehen, die in Gestalt eines oder mehrerer von der Buchse 4 in dazu ausgerichteten Bohrungen im Gleitring 1 sich erstreckenden Mitnehmerstiften ausgebildet sein kann. Andere Mitnehmeranordnungen können ebenfalls vorgesehen sein. Der Gleitring 1 ist gegenüber der Buchse 4 durch eine geeignete Sekundärdichtung abgedichtet, wie dies bei 6 angedeutet ist.

Der andere Gleitring 2 ist in Bezug auf ein Dichtungsgehäuse 7 drehfest, jedoch axial beweglich gehalten. Eine Vorspanneinrichtung 8 in Gestalt einer oder mehrerer Axialdruckfedern, die sich mit einem Ende am Dichtungsgehäuse 7 und am anderen Ende an einem darin axial beweglich gehaltenen Kraftübertragungsglied 9 abstützen, ist vorgesehen, um den Gleitring 2 gegen den rotierenden Gleitring 1 mit einer axialen Vorspannkraft zu beaufschlagen. Bei 10 ist eine Sekundärdichtung zur Abdichtung des Gleitringes 2 gegenüber dem Dichtungsgehäuse 7 angedeutet. Das Dichtungsgehäuse 7 kann an einem Triebwerksgehäuse 11, wie dies bei 12 angedeutet ist, in geeigneter Weise befestigt, z.B. angeschraubt sein.

Die Gleitringe 1, 2 haben einander zugewandte Gleitflächen 13, 14, zwischen denen bei Betrieb ein Dichtspalt gebildet wird, um einen Bereich aussenumfänglich gegenüber einem Bereich innenumfänglich der Gleitflächen 13, 14 abzudichten. Die Dichtspaltbildung kann durch förderwirksame Strukturen 20 in einer oder beiden Gleitflächen 13, 14, vorzugsweise in der Gleitfläche 13 des rotierenden Gleitringes 1, unterstützt werden. Bezüglich weiterer Details zum Aufbau und zur Wirkung derartiger förderwirksamer Strukturen 20 kann z.B. auf BURGMANN, Gasgeschmierte Gleitringdichtungen, Selbstverlag 1997, Seiten 16 bis 23 verwiesen werden.

Aufgrund der reibungsminimierenden Eigenschaft und der ausreichenden thermischen und mechanischen Beständigkeit bzw. Festigkeit besteht der drehfeste Gleitring vorzugsweise aus einem Kohlenstoffmaterial. Geeignete Kohlenstoffmaterialien sind in BURGMANN, ABC der Gleitringdichtung, Selbstverlag 1988, Seiten 269-270 beschrieben. Andere geeignete reibungsminimierende Materialien können ebenfalls für den drehfesten Gleitring 2 vorgesehen werden.

Bei der erfindungsgemässen Gleitringdichtungsanordnung kommt die Gleitringpaarung ohne Einsatz eines Stahlmaterials aus, das bislang wenigstens für den rotierenden Gleitring 1 aus Sicherheitsgründen für erforderlich gehalten wurde. Der rotierende Gleitring 1 besteht vielmehr erfindungsgemäss aus einem metallfreien Verbundmaterial, das aus einem faserverstärkten Keramikmaterial gebildet ist.

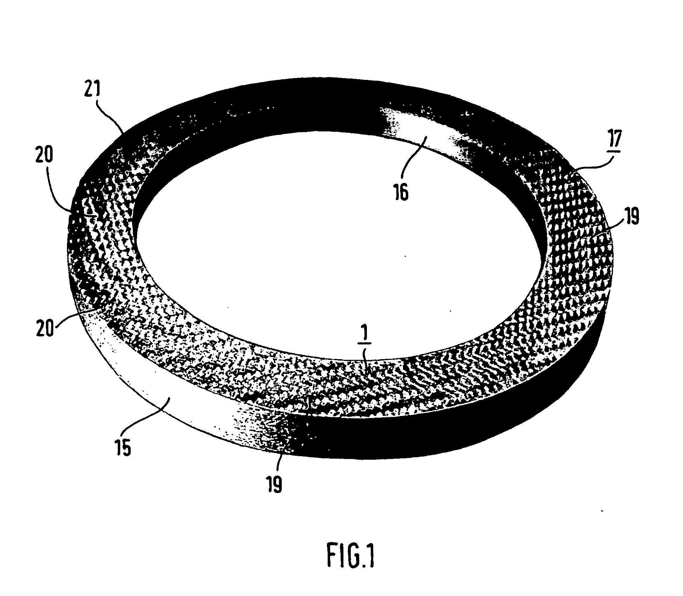

Fig. 1 zeigt eine Ausführungsform eines aus dem Verbundmaterial gebildeten rotierenden Gleitringes 1. Der Gleitring 1 hat danach einen vorzugsweise rechteckförmigen Querschnitt mit äusseren und inneren Umfängen 15, 16 und planen vorderen und hinteren Stirnflächen 17, 18, von denen in Fig. 1 nur die vordere Stirnfläche 17 gezeigt ist. Auf wenigstens einem Teilbereich der Stirnfläche 17 ist die Gleitfläche 13 ausgebildet. In dem Bereich der Stirnfläche 17, der die Gleitfläche 13 enthält, können nach bekannten Techniken, z.B. mittels Laserabtragtechnik, förderwirksame Strukturen 20 (nur einige sind gezeigt) umfänglich verteilt eingebracht sein, auf die zuvor schon hingewiesen wurde. Bei einem innen mit dem Medium beaufschlagten Gleitring 1 münden die förderwirksamen Strukturen 20, wie zu sehen ist, am inneren Umfang 16 aus. Bei Aussenbeaufschlagung würden sie am äusseren Umfang 15 ausmünden. In jedem Fall erstrecken sich die förderwirksamen Strukturen 20 vom jeweiligen einen Umfang 15 bzw. 16 in Richtung auf den betreffenden anderen Umfang, um in einem geeigneten Abstand dazu zu enden, so dass ein Dammbereich 21 verbleibt, der frei von förderwirksamen Strukturen 20 ist.

Der Gleitring 1 gemäss der bevorzugten Ausführungsform der Erfindung umfasst in einem Siliciumkarbid(SiC)-Matrixmaterial eingebettete Kohlenstoff-Verstärkungsfasem, die sich durch eine hohe thermische Beständigkeit bei gleichzeitig hoher unidirektionaler Zugfestigkeit auszeichnen, wobei sie eine im Vergleich zum SiC-Matrixmaterial wesentich bessere Duktilität besitzen. Die Duktilität der Kohlefasem wirkt der natürlichen Sprödbruchneigung von SiC wirksam entgegen, indem die überwiegend mechanischen Beanspruchungen eines mit einem solchem Verbundmaterial ausgestatteten Gleitringes 1 im Wesentlichen von den Verstärkungsfasern unter Entlastung des SiC-Matrixmaterials aufgenommen werden. Dabei bleibt die hohe Verschleissfestigkeit von SiC praktisch unbeeinträchtigt erhalten.

Die Kohlefasern sind in dem SiC-Verbundmaterial in gerichteter Form vorgesehen sein.

Dabei kann es sich um nach einem bestimmten Muster schichtweise zu einer Rohrform gewickelte Fäden oder Rovings aus Kohlefasern handeln, wobei sich die Fäden einer Schicht mit den Fäden einer benachbarten Schicht kreuzen können, oder es handelt sich um in dem SiC-Verbundmaterial- eingebettete vorgefertigte übereinandergeschichtete Gelege oder Gewebe aus gerichteten Kohlefaserfäden, wie dies in Fig. 1 bei 19 zu erkennen ist. Die in Fig. 1 ersichtliche Ausrichtung der Fäden ist nicht zwingend. Es können auch andere geeignete Fadenausrichtungen vorgesehen sein, z.B. eine überwiegend umfängliche Ausrichtung.

Ein aus gerichteten Kohlefasem verstärktes SiC-Verbundmaterial zeichnet sich durch eine besonders hohe mechanische Festigkeit in Faserrichtung aus und wird deshalb bevorzugt für Gleitringe 1 herangezogen, die zum Einsatz bei Gleitringdichtungsanordnungen im Hochdrehzahlbereich eines Strahltriebwerkes vorgesehen sind, wo hohe bis sehr hohe Zentrifugalkräfte auf den Gleitring 1 einwirken können, zumal die radialen Abmessungen der Gleitringe 1 vergleichsweise gross sind und diese z.B. einen mittleren Durchmesser von 150 mm und mehr haben können.

Ferner ist wenigsten die vordere Stirnfläche 17 des Gleitringes 1, die die Gleitfläche 13 vorsieht, mit einer Deckschicht (nicht gezeigt) aus einem mit Kohlefasem von vergleichsweise kurzer Länge verstärkten SiC Verbundmaterial bedeckt, bei dem die Kohlefasem in ungerichteter Form vorliegen. Die Deckschicht kann eine Schichtdicke zwischen 0,1 und 1,0 mm, vorzugsweise 0,25 und 0,5 mm haben. Die förderwirksamen Strukturen 20 sind in der Deckschicht eingebracht. Die Deckschicht verhindert ein eventuelles Aufstellen bzw. Ausfransen der gerichteten Kohlefasern der aufeinandergeschichteten Gelege an der Stirnfläche 17 des Gleitringes 1. Wenn erwünscht, kann eine derartige Deckschicht auch an der gegenüberliegenden Stirnfläche 18 des Gleitringes 1 vorgesehen werden.

Sofern die Länge der Kohlefasern gleich oder grösser 5 mm ist, vorzugsweise zwischen 15 und 25 mm beträgt, sind ausreichende mechanische Eigenschaften gewährleistet.

Die Kohlenstoffasern sollten einen Durchmesser kleiner 15 µm, vorzugsweise zwischen 2 und 12 µm haben, da mit geringer werdendem Durchmesser verbesserte mechanische Eigenschaften der Fasern einhergehen.

Ferner sollte der Anteil der Kohlefasern im SiC-Verbundmaterial zwischen 45 und 65, vorzugsweise zwischen 50 und 60 Vol. % betragen.

Es wurde femer festgestellt, dass anstelle von Kohlefasern auch Siliciumfasem als Verstärkung bei einem Verbundmaterial auf Basis eines SiC-Keramikmaterials verwendet werden können.

### Beispiel:

Es wurde ein Verbundmaterial aus gerichteten Kohlefasern als Verstärkung und einer SiC-Matrix nach einem bekannten Verfahren hergestellt, indem Gelege aus Kohlefasern mit einer mittleren Länge von 70 mm, ein Pulver aus Kohlenstoff und eine Kohlenstoffharz zu einer pressfähigen Masse geschichtet und die Schichtanordnung formverpresst wurde. Anschliessend wurde eine Karbonisierung bei einer Temperatur von ca. 900°C unter Umwandlung des Harzes in Kohlenstoff durchgeführt. Es entstand eine poröse Struktur mit Hohlräumen. In diese wurde flüssiges Silizium eindringen gelassen, das bei Temperaturen von ca. 1500 °C in SiC umgewandelt wurde, wodurch die Kohlefasern in SiC eingebettet wurden. Ein typischer nach diesem Verfahren hergestellter Rohling für den Gleitring 1 hat eine Dichte von 1,45 Kg/dm³, einen Elastizitätsmodul von 53 KN/mm², eine Zugfestigkeit von 265 KN/mm² und eine Wärmedehnung von 1 x 10⁻⁶ 1/K. Der Faseranteil betrug 55 Vol.%. Aus dem so erhaltenen Verbundmaterial wurde ein Gleitring 1 mit folgenden Abmessungen herausgeschnitten: Durchmesser innen: 130 mm, aussen: 170mm, Dicke 13 mm. Die Duktilität des Gleitringes 1 war vergleichbar mit dem eines bekannten Gleitringes aus einem Stahlmaterial. Das Gewicht des Verbundgleitringes betrug nur etwa. 1/5 desjenigen eines Stahlgleitringes.

Um eine Deckschicht, wie vorbeschrieben, an einer der Stirnflächen 17, 18 des Gleitringes 1 anzuordnen, wird zusätzlich zu dem geschichtete Gelege aus gerichteten Kohlefasern eine dünne Lage aus einem Gemisch aus ungerichteten Kohlefasem, einem Pulver aus Kohlenstoff und einen Kohlenstoffharz an der Stirnflläche angelegt und zusammen mit dem Schichtgelege in der erwähnten Weise weiterbehandelt.

Praxisnahe Tests an einer gasgeschmierten Gleitringdichtungsanordnung mit einem rotierenden Gleitring in Gestalt eines erfindungsgemässen Verbundgleitringes mit förderwirksamen spiralförmig verlaufenden Strukturen in seiner Gleitfläche zeigten über die gesamte ausgedehnte Testdauer keine Sprödbrüche der SiC-Matrix, so dass der Gleitring in Bezug auf seine Sicherheitsfunktion einem solchen aus einem Stahlmaterial wenigstens ebenbürtig ist. Der Verschleiss war jedoch wesentlich geringer, und ferner brauchte keine Kühlung des Verbundgleitringes vorgesehen werden, während die bekannten Stahlgleitringe zur Kühlung von einem Kühlmedium durchströmte Kühlkanäle enthalten müssen.

## Patentansprüche

1. Zur gemeinsamen Drehung mit einer Triebwerkswelle ausgelegter Gleitring (1) einer Gleitringdichtungsanordnung für Strahltriebwerke, gebildet aus einem ein faserverstärktes Keramikmaterial umfassenden Verbundmaterial **dadurch gekennzeichnet, daß** er mit gerichteten Verstärkungsfasern versehen ist, wobei eine Deckschicht aus einem faserverstärkten SiC-Verbundmaterial auf wenigstens einer der gegenüberliegenden Stirnflächen (17,18) des Gleitringes (1) vorgesehen ist, wobei die Verstärkungsfasern der Deckschicht ungerichtet sind.

2. Gleitring nach Anspruch 1, **dadurch gekennzeichnet, dass** die Verstärkungsfasern aus einer Kohle- und SiC-Fasern umfassenden Verstärkungsfasergruppe gewählt sind.

3. Gleitring nach Anspruch 1 oder 2, **dadurch gekennzeichnet, dass** das Keramikmaterial ein SiC-Material umfasst.

4. Gleitring nach einem der vorhergehenden Ansprüche, **dadurch gekennzeichnet, dass** der Verstärkungsfaseranteil des Verbundmaterials zwischen 45 und 65 Vol. %, vorzugsweise zwischen 50 und 60 Vol. % beträgt.

5. Gleitring nach einem der vorhergehenden Ansprüche, **dadurch gekennzeichnet, dass** der Durchmesser der Verstärkungsfasern kleiner 15 µm, vorzugsweise zwischen 2 und 12 µm beträgt.

6. Gleitring nach Anspruch 1, **dadurch gekennzeichnet, dass** ein Verstärkungsfasergewebe vorgesehen ist.

7. Gleitring nach Anspruch 1, **dadurch gekennzeichnet, dass** eine durch einen Faserwickelvorgang geschaffene Faserverstärkung vorgesehen ist.

8. Gleitring nach Anspruch 1, **dadurch gekennzeichnet, dass** die Dicke der Deckschicht zwischen 0,1 und 1,0 mm, vorzugsweise 0,25 und 0,5 mm, beträgt.

9. Gleitring nach einem der vorhergehenden Ansprüche, **dadurch gekennzeichnet, dass** an der mit der Deckschicht versehenen Stirnfläche (17) eine Gleitfläche (13) mit darin eingebrachten förderwirksamen Strukturen (20) ausgebildet ist.

10. Gleitringdichtungsanordnung für Strahltriebwerke mit wenigstens einem Paar zusammenwirkender Gleitringe (1,2), von denen einer zur drehfesten Montage an einem stationären Bauteil und der andere zur gemeinsamen Drehung mit einer Triebwerkswelle ausgelegt ist, umfassend eine Werkstoffpaarung für die Gleitringe (1,2), die ein reibungsminimierend wirksames Material für den drehfesten Gleitring (2) und ein Verbundmaterial aus einem faserverstärkten Keramikmaterial für den drehenden Gleitring (1) umfasst, **dadurch gekennzeichnet, daß** er mit gerichteten Verstärkungsfasern versehen ist, wobei eine Deckschicht aus einem faserverstärkten SiC-Verbundmaterial auf einer der Stirnflächen (17,18) des Gleitringes (1), die ein Gleitfläche schafft, vorgesehen ist, wobei die Verstärkungsfasern der Deckschicht ungerichtet sind.

11. Gleitringdichtungsanordnung für Strahltriebwerke nach Anspruch 10, **dadurch gekennzeichnet, dass** das Verbundmaterial ein Kohle- oder SiC-faser verstärktes SiC-Verbundmaterial ist.

12. Gleitringdichtungsanordnung für Strahltriebwerke nach Anspruch 10 oder 11, **dadurch gekennzeichnet, dass** das reibungsminimierend wirksame Material ein Kohlenstoffmaterial ist.

13. Gleitringdichtungsanordnung für Strahltriebwerke nach einem der Ansprüche 10 bis 12, **dadurch gekennzeichnet, dass** in der Gleitfläche (13) des drehenden Gleitringes (1) förderwirksame Strukturen vorgsehen sind.

## Claims

1. A seal ring (1) of a mechanical face seal device for jet engines for rotation in common with an engine shaft, said seal ring being formed of a composite material comprising a fibre-reinforced ceramic material, **characterized in that** said composite material has aligned reinforcing fibres in which a cover layer consisting of a fibre-reinforced SiC composite material being provided on at least one of the opposite end faces (17, 18) of said seal ring (1), whereby the reinforcing fibres in the cover layer are unaligned.

2. The seal ring according to claim 1, **characterized in that** the reinforcing fibres are selected from a group of reinforcing fibres comprising carbon and SiC fibres.

3. The seal ring according to claim 1 or 2, **characterized in that** the ceramic material comprises a SiC material.

4. The seal ring according to any of the preceding claims, **characterized in that** the portion of reinforcing fibre in the composite material is between 45 and 65 vol. %, preferably between 50 and 60 vol. %.

5. The seal ring according to any of the preceding claims, **characterized in that** the diameter of the reinforcing fibres is less than 15 µm, preferably between 2 and 12 µm.

6. The seal ring according to claim 1, **characterized in that** a fabric of reinforcing fibres is provided.

7. The seal ring according to claim 1, **characterized by** a fibre reinforcement which is produced by a fibre filament winding process.

8. The seal ring according to claim 1, **characterized in that** the thickness of the cover layer is between 0.1 and 1.0 mm, preferably 0.25 and 0.5 mm.

9. The seal ring according to any of the preceding claims, **characterized in that** a seal face (13) having pumping structures (20) formed therein is provided in said end face (17) provided with said cover layer.

10. A mechanical face seal device for jet engines having at least one pair of cooperating seal rings (1, 2), one thereof being provided for non-rotational mounting on a stationary component and the other for rotation in common with an engine shaft, comprising a pairing of materials for the seal rings (1, 2) which includes a friction minimizing material for the non-rotational seal ring (2) and a composite material consisting of a fibre-reinforced ceramic material for the rotary seal ring (1), **characterized in that** said composite material has aligned reinforcing fibres in which a cover layer consisting of a fibre-reinforced SiC composite material is provided on at least one of the opposite end faces (17, 18) of the rotary seal ring (1), whereby the reinforcing fibres of the cover layer are unaligned, said cover layer provides for a seal face

11. The mechanical face seal device for jet engines according to claim 10, **characterized in that** the composite material is a SiC composite material reinforced with carbon or SiC fibres.

12. The mechanical face seal device for jet engines according to claim 10 or 11, **characterized in that** the friction-minimizing material is a carbon material.

13. The mechanical face seal device for jet engines according to any of the claims 10 to 12, **characterized in that** pumping structures (20) are formed in the seal face (13) of the rotary seal ring (1).

## Revendications

1. Anneau de glissement (1) d'un système d'étanchéité à anneau de glissement pour moteurs à réaction, conçu pour la rotation conjointe avec un arbre de turbine, constitué d'un matériau compound comprenant un matériau céramique renforcé par des fibres, **caractérisé en ce qu'**il est muni de fibres de renfort dirigées, une couche de couverture en un matériau compound SiC (carbure de silicium) renforcé par des fibres étant prévue sur au moins une des surfaces frontales (17, 18) situées l'une en face de l'autre de l'anneau de glissement (1), les fibres de renfort de la couche de couverture n'étant pas dirigées.

2. Anneau de glissement selon la revendication 1, **caractérisé en ce que** les fibres de renfort sont choisies dans un groupe de fibres de renfort comprenant des fibres de carbone et des fibres SiC.

3. Anneau de glissement selon la revendication 1 ou 2, **caractérisé en ce que** le matériau en céramique comprend un matériau SiC.

4. Anneau de glissement selon l'une des revendications précédentes, **caractérisé en ce que** la partie en fibres de renfort du matériau compound s'élève entre 45 et 65 % vol., de préférence entre 50 et 60 % vol.

5. Anneau de glissement selon l'une des revendications précédentes, **caractérisé en ce que** le diamètre des fibres de renfort est inférieur à 15 µm, s'élève de préférence entre 2 et 12 µm.

6. Anneau de glissement selon la revendication 1, **caractérisé en ce qu'**est prévu un treillis en fibres de renfort.

7. Anneau de glissement selon la revendication 1, **caractérisé en ce qu'**est prévu un renfort de fibres créé par un procédé d'enroulement de fibres.

8. Anneau de glissement selon la revendication 1, **caractérisé en ce que** l'épaisseur de la couche de couverture s'élève entre 0,1 et 1,0 mm, de préférence 0,25 et 0,5 mm.

9. Anneau de glissement selon l'une des revendications précédentes, **caractérisé en ce que**, sur la surface frontale (17) munie de la couche de couverture, est réalisée une surface de glissement (13) incluant des structures (20) favorisant le transport.

10. Système d'étanchéité à anneau de glissement pour moteurs à réaction avec au moins une paire d'anneaux de glissement (1, 2) agissant conjointement, dont l'un est conçu pour le montage fixe en rotation sur une pièce de construction stationnaire et l'autre pour la rotation commune avec un arbre de turbine, comprenant un appariement de matériaux pour les anneaux de glissement (1, 2), qui comprend un matériau agissant de manière à minimiser les frottements pour l'anneau de glissement (2) fixe en rotation et un matériau compound dans un matériau céramique renforcé par des fibres pour l'anneau de glissement rotatif (1) **caractérisé en ce qu'**il est muni de fibres de renfort dirigées, une couche de couverture en un matériau compound SiC renforcé par des fibres étant prévue sur une des surfaces frontales (17, 18) de l'anneau de glissement (1), qui crée une surface de glissement, les fibres de renfort de la couche de couverture n'étant pas dirigées.

11. Système d'étanchéité à anneau de glissement pour moteurs à réaction selon la revendication 10, **caractérisé en ce que** le matériau compound est un matériau compound SiC renforcé par des fibres de carbone ou des fibres SiC.

12. Système d'étanchéité à anneau de glissement pour moteurs à réaction selon la revendication 10 ou 11, **caractérisé en ce que** le matériau agissant de manière à minimiser les frottements est un matériau en carbone.

13. Système d'étanchéité à anneau de glissement pour moteurs à réaction selon l'une des revendications 10 à 12, **caractérisé en ce que** sont prévues dans la surface de glissement (13) de l'anneau de glissement rotatif (1) des structures favorisant le transport.
